# EUROPEAN PATENT APPLICATION

(11) **EP 1 426 875 A2**
(43) Date of publication of application: **09.06.2004**
(21) Application number: 03026814.8
(22) Date of filing: 20.11.2003
(51) Int. Cl.: G06F 17/24

(54) **Extensible schema for electronic ink**

(30) Priority: 03.12.2002 US 308158
(71) Applicant: MICROSOFT CORPORATION, Redmond, WA 98052 (US)
(72) Inventor: Szilagyi, Zoltan C., Redmond WA 98052 (US); Jarrett, Robert, Sonohomish WA 98296 (US); Quinton, Mary Michelle, Sammamish WA 98074 (US)
(74) Representative: Grünecker, Kinkeldey, Stockmair & Schwanhäusser Anwaltssozietät

(57) **Abstract**

A system, method, and data structure are described that permit schemas to be written for ink. In a first example, a schema may be written for addressing various nodes types in a hierarchy of ink. In another example, a schema may be written defining user interactions. Finally, these schemas may be combined to provide extensibility of new interaction models.

## Description

### Technical Field

Aspects of the present invention are directed to schemas. More particularly, aspects of the present invention are directed to schemas for semantic information about ink and the extensibility of user interaction methods with the ink.

### Background

Word processors store information in a linear arrangement. While text may be wrapped to fit a window, the data stream is commonly a linear file with various line, paragraph, section, and page breaks. As is known in the word processing art, one may select a word, sentence, or paragraph. This functionality exists because words, sentences, and paragraphs are well known. The application using the words, sentences, and paragraphs is hard coded with the knowledge of how these items interrelate. Further the user interface for interacting with these items is also well known. As applied to ink, one may hard code paragraphs, lines, and words directly into the application interacting with the ink. An example of hard coding an application to handle various entities is as follows:
If selected entity is a paragraph, then ...;
Otherwise, if selected entity is a word, then ...;
Otherwise, ....

However, this approach leads to three difficulties.

First, hard coding applications with knowledge of paragraphs, lines, and words works well for these items yet erects barriers for new entities to be introduced. For example, if one application identified sentences in ink-based systems, other applications that have been hard coded with all the types of entities that existed at the time the application was made would return errors on attempting to process sentence-based data structures and commands. Also, the code for the application would need to be rewritten to provide support for the new entity. Further, difficulties arise when attempting to share data files between the new-entity-enabled and non-enabled applications.

Second, scripting user interaction with new entities is difficult. One is required to script new interaction models into old versions of the code or return errors every time a user attempts to interact with a new entity.

Third, a discontinuity exists as the code addressing the new entity for how it integrates with an application is generally different from the code that handles the user interface for the new entity. Coding errors inevitably arise because of the incompatibility of the code sets.

A better approach is needed for adding new entities to ink-based applications.

### Summary

Aspects of the present invention provide solutions to at least one of the issues mentioned above, thereby enabling one to create new node types in an ink tree as well as define new interaction models for use with new and existing ink-enabled systems. Aspects of the present invention relate to defining at least one of ink node types and interaction models as extensible schemas.

These and other aspects of the present invention will become known through the following drawings and associated description.

### Brief Description of Drawings

The foregoing summary of some of the aspects of the invention, as well as the following detailed description of the various embodiments, is better understood when read in conjunction with the accompanying drawings, which are included by way of example, and not by way of limitation with regard to the claimed invention.

Figure 1 shows a general description of a computer that may be used in conjunction with embodiments of the present invention.

Figures 2A and 2B show illustrative parsings of sentences in accordance with embodiments of the present invention.

Figure 3 shows a sample paragraph in accordance with embodiments of the present invention.

Figure 4 shows a representative tree structure applied to the paragraph of Figure 3 in accordance with embodiments of the present invention.

Figure 5 shows an ink object and structure information in accordance with embodiments of the present invention.

Figures 6A and 6B show illustrative tree structures in accordance with embodiments of the present invention.

Figure 7 shows an example of extensible schema that defines aspects of ink in accordance with embodiments of the present invention.

### Detailed Description

Aspects of the present invention relate to providing extensible schemas for handling ink document structure and user interaction models. Using extensible schemas, one may easily vary the structure of an ink-based document or other form. For example, while word processors are effectively narrow (or limited) in a document's structure, an ink-based document is not so constrained. An ink-based document with a schema-based node definition grants users the freedom to create any document form (which may be further combined with recognizing/parsing technologies to help determine a document's structure or semantics).

The following is arranged into a number of subsections to assist the reader in understanding the various aspects of the invention. The subsections include: terms; general-purpose computer; ink trees; illustrative paragraph; executing functions; and data structures.

### Terms

Ink - A sequence or set of strokes with properties. A sequence of strokes may include strokes in an ordered form. The sequence may be ordered by the time captured or by where the strokes appear on a page. Other orders are possible. A set of strokes may include sequences of strokes or unordered strokes or any combination thereof. Ink may be expanded to include additional properties, methods, and trigger events and the like. When combined with at least some of these events, it may be referred to as an ink object.

Ink object - A data structure storing a ink with or without properties, methods, and/or events.

Stroke - A sequence or set of captured points. For example, when rendered, the sequence of points may be connected with lines. Alternatively, the stroke may be represented as a point and a vector in the direction of the next point. In short, a stroke is intended to encompass any representation of points or segments relating to ink, irrespective of the underlying representation of points and/or what connects the points.

Point - Information defining a location in space. For example, the points may be defined relative to a capturing space (for example, points on a digitizer), a virtual ink space (the coordinates in a space into which captured ink is placed), and/or display space (the points or pixels of a display device).

### General Purpose Computer

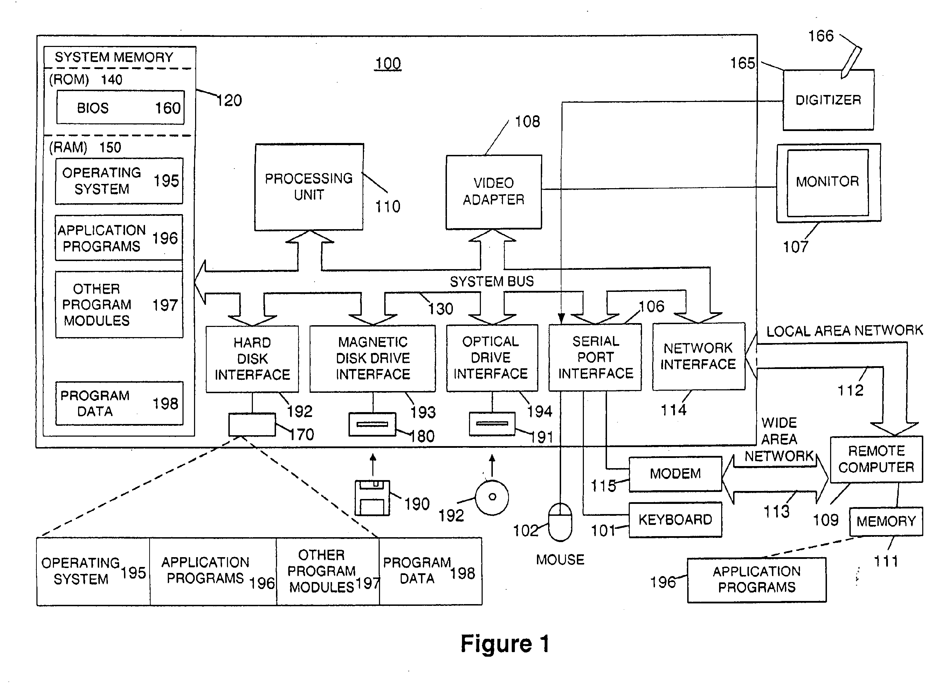

Figure 1 is a functional block diagram of an example of a conventional general-purpose digital computing environment that can be used to implement various aspects of the present invention. In Figure 1, a computer 100 includes a processing unit 110, a system memory 120, and a system bus 130 that couples various system components including the system memory to the processing unit 110. The system bus 130 may be any of several types of bus structures including a memory bus or memory controller, a peripheral bus, and a local bus using any of a variety of bus architectures. The system memory 120 includes read only memory (ROM) 140 and random access memory (RAM) 150.

A basic input/output system 160 (BIOS), containing the basic routines that help to transfer information between elements within the computer 100, such as during start-up, is stored in the ROM 140. The computer 100 also includes a hard disk drive 170 for reading from and writing to a hard disk (not shown), a magnetic disk drive 180 for reading from or writing to a removable magnetic disk 190, and an optical disk drive 191 for reading from or writing to a removable optical disk 192 such as a CD ROM or other optical media. The hard disk drive 170, magnetic disk drive 180, and optical disk drive 191 are connected to the system bus 130 by a hard disk drive interface 192, a magnetic disk drive interface 193, and an optical disk drive interface 194, respectively. The drives and their associated computer-readable media provide nonvolatile storage of computer readable instructions, data structures, program modules and other data for the personal computer 100. It will be appreciated by those skilled in the art that other types of computer readable media that can store data that is accessible by a computer, such as magnetic cassettes, flash memory cards, digital video disks, Bernoulli cartridges, random access memories (RAMs), read only memories (ROMs), and the like, may also be used in the example operating environment.

A number of program modules can be stored on the hard disk drive 170, magnetic disk 190, optical disk 192, ROM 140 or RAM 150, including an operating system 195, one or more application programs 196, other program modules 197, and program data 198. A user can enter commands and information into the computer 100 through input devices such as a keyboard 101 and pointing device 102. Other input devices (not shown) may include a microphone, joystick, game pad, satellite dish, scanner or the like. These and other input devices are often connected to the processing unit 110 through a serial port interface 106 that is coupled to the system bus, but may be connected by other interfaces, such as a parallel port, game port or a universal serial bus (USB). Further still, these devices may be coupled directly to the system bus 130 via an appropriate interface (not shown). A monitor 107 or other type of display device is also connected to the system bus 130 via an interface, such as a video adapter 108. In addition to the monitor, personal computers typically include other peripheral output devices (not shown), such as speakers and printers. In a preferred embodiment, a pen digitizer 165 and accompanying pen or stylus 166 are provided in order to digitally capture freehand input. Although a direct connection between the pen digitizer 165 and the serial port is shown, in practice, the pen digitizer 165 may be coupled to the processing unit 110 directly, via a parallel port or other interface and the system bus 130 as known in the art. Furthermore, although the digitizer 165 is shown apart from the monitor 107, it is preferred that the usable input area of the digitizer 165 be co-extensive with the display area of the monitor 107. Further still, the digitizer 165 may be integrated in the monitor 107, or may exist as a separate device overlaying or otherwise appended to the monitor 107.

The computer 100 can operate in a networked environment using logical connections to one or more remote computers, such as a remote computer 109. The remote computer 109 can be a server, a router, a network PC, a peer device or other common network node, and typically includes many or all of the elements described above relative to the computer 100, although only a memory storage device 111 has been illustrated in Figure 1. The logical connections depicted in Figure 1 include a local area network (LAN) 112 and a wide area network (WAN) 113. Such networking environments are commonplace in offices, enterprise-wide computer networks, intranets and the Internet and use both wired and wireless communication protocols.

When used in a LAN networking environment, the computer 100 is connected to the local network 112 through a network interface or adapter 114. When used in a WAN networking environment, the personal computer 100 typically includes a modem 115 or other means for establishing a communications over the wide area network 113, such as the Internet. The modem 115, which may be internal or external, is connected to the system bus 130 via the serial port interface 106. In a networked environment, program modules depicted relative to the personal computer 100, or portions thereof, may be stored in the remote memory storage device.

It will be appreciated that the network connections shown are illustrative and other techniques for establishing a communications link between the computers can be used. The existence of any of various well-known protocols such as TCP/IP, Ethernet, FTP, HTTP and the like is presumed, and the system can be operated in a client-server configuration to permit a user to retrieve web pages from a web-based server. Any of various conventional web browsers can be used to display and manipulate data on web pages.

### Ink Trees

Computers arrange data into organized structures, so that the data can be easily located and accessed. One type of commonly used data structure is a nodal data structure of which a tree structure is but one example. In a tree structure, related pieces of data form individual nodes in the tree. Each node (except for the root node) will have only a single parent node, but may have a plurality of sibling nodes (who share the same parent) and a plurality of child nodes. Conventionally, a node A is referred to as a descendant of node B if node A's parent is node B, or if node A's parent is a descendant of node B. Similarly, node A is referred to as an ancestor of node B if node B is a descendant of node A.

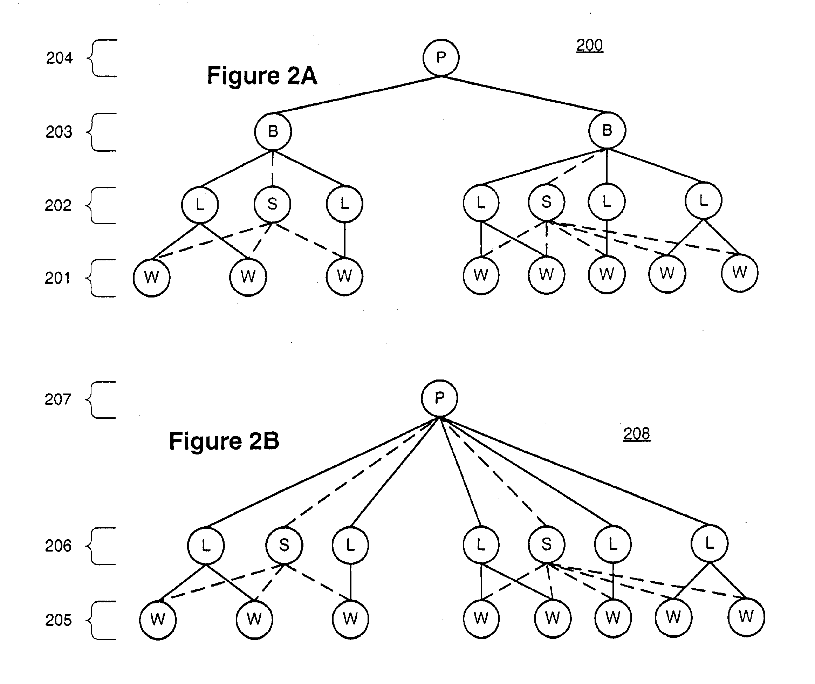

Figures 2A and 2B graphically illustrate how a tree structure can be used to organize information. More particularly, these figures illustrate how a tree structure can be used to organize data relating to electronic ink, so that the ink can be manipulated by a user or recognized by a recognition function of an application. Electronic ink may be made up of strokes, with each stroke corresponding to, for example, movement of a pointing device. Each stroke includes information defining the properties of the stroke, such as the data points making up the stroke, a directional vector of the stroke, a color of the stroke, and a thickness at which the stroke is to be rendered on a display.

One benefit of using a tree structure (or other graph) in relation to ink includes the ability to manipulate ink information directly (using strokes, words, blocks, and the like) or by addressing a node in a tree with the node and/or sub nodes being modified. This provides legacy support for different versions of code as original code addressing ink directly may still be used. Additionally, newer code may use the structure information to simplify the addressing process.

Another benefit of using trees is the ability to easily address whole sub-trees. For example, while setting a paragraph to a blue ink color may have no meaning for the paragraph itself (as a paragraph or block node in a tree may not have any identifier for an ink color), using an ink tree provides the ability to specify an ink color for a paragraph and have the color of the ink set for each stroke in the paragraph.

While strokes can be individually manipulated, it generally is more efficient to first organize strokes before manipulating them. Thus, a parser may be used to establish relationships between individual strokes, and then organize the strokes into larger units for editing or handwriting recognition. For example, a parser may be used to associate groups of related strokes together into units that form a word. Similarly, the parser may associate groups of one or more words together to form a line, and associate groups of one or more lines together to form a block or paragraph. The parser may then associate groups of one or more blocks or paragraphs together to form a single page or a document.

The parser may operate automatically (making relationships on its own), manually (a user specifying the relationships between ink), or a combination of both.

A parser typically will need to analyze electronic ink several times to produce a tree structure that accurately represents the relationships between the electronic ink strokes. Moreover, each time that the electronic ink is edited, the parser will need to update the tree. The parser may therefore need to operate frequently and for prolonged periods of time. To avoid having the parser constantly interfere with active software applications each time that it needs to refine the tree structure, the parser may instead continuously operate in the background with some environments. The tree includes a variety of node types:
Word node type;
Line node type;
Block node type;
Page node type;
Paragraph node type; and
Sentence node type.

These various node types are shown in the instances of the node types as shown in Figures 2A and 2B.

Figure 2A illustrates a tree structure 200 representing the results that might typically be provided by a parser. The tree 200 includes word nodes 201. Each word node 201 contains the data for the individual strokes that make up a corresponding word W. More particularly, if the parser has determined that a group of strokes makes up a word W, then the data for those strokes are contained (or reference by) the word node 201 representing the word W.

If multiple words W are associated by the parser with a single line L, then the word nodes 201 for the words W are arranged as children of a line node 202 corresponding to the line L. The line nodes 202 may include data common to all of its children, such as the color or thickness of the ink making up the words W in the line L. Line nodes 202, corresponding to lines L that the parser has associated into a block B, are then arranged as children of a block node 203 corresponding to the block B. The block nodes 203 in turn serve as children of a page node 204, which, in the illustrated example, is the root node for the tree 200. Of course, if the parser recognized multiple page boundaries, then the page node 204 might itself be a child of a root node corresponding to the entire document.

Figure 2B shows an alternative ink structure in which ink information is parsed in terms of lines and paragraphs, as opposed to line, blocks, and pages. The ink tree is shown as structure 208 with ink word nodes 205 connected to line nodes 206. The line nodes 206 are connected back to paragraph node 207.

Optional sentence structure information may be represented by sentence nodes S in Figure 2A and Figure 2B. This information may also be used in place of, or in conjunction with, line nodes 201 and 206. This sentence structure information provides the ability of the system to operate in terms of distinct sentences, as opposed to ink on lines. In some cases, a sentence may straddle multiple lines. In other cases, multiple sentences may occur in one line. The inclusion of the sentence information may violate the formal definition of a tree (each child has exactly one parent node). Here, inclusion of the sentence information provides two parents (the line nodes and the sentence nodes) for the various word nodes. This inclusion is more accurately represented by a directed acyclic graph (DAG). Accordingly, either trees or other structures may be used to accurately represent ink information.

The inclusion of sentence information (nodes S in Figures 2A and 2B) is problematic if the original ink tree structure did not contemplate sentence information. In other words, the ink information may have been coded specifically into the operating system or application that is used to create and traverse the ink trees 200 and 208. This hard coding makes later addition of new node types difficult.

Representing the ink information as part of a schema permits a solution to the above problem. For example, instead of predefining a list of node types in an application, a schema representation may be used to provide the node types. Using the schema representation, one may create a rich and complex expression of the ink tree. When the ink tree with new nodes is processed by an older application, at least one of two actions will occur: first, the application may look to the ink schema to determine whether the new nodes comport with the schema and act appropriately, and second, the application may ignore the new nodes and continue processing the ink tree. In this second action, the application may still provide its underlying functionality without returning an error because of processing unknown nodes.

This approach is flexible to allow for modifications in the schema including new definitions of annotation types and other parameters. Further, one may define different nodes (represented generally as "node type") and have the new nodes extensible to legacy and future systems.

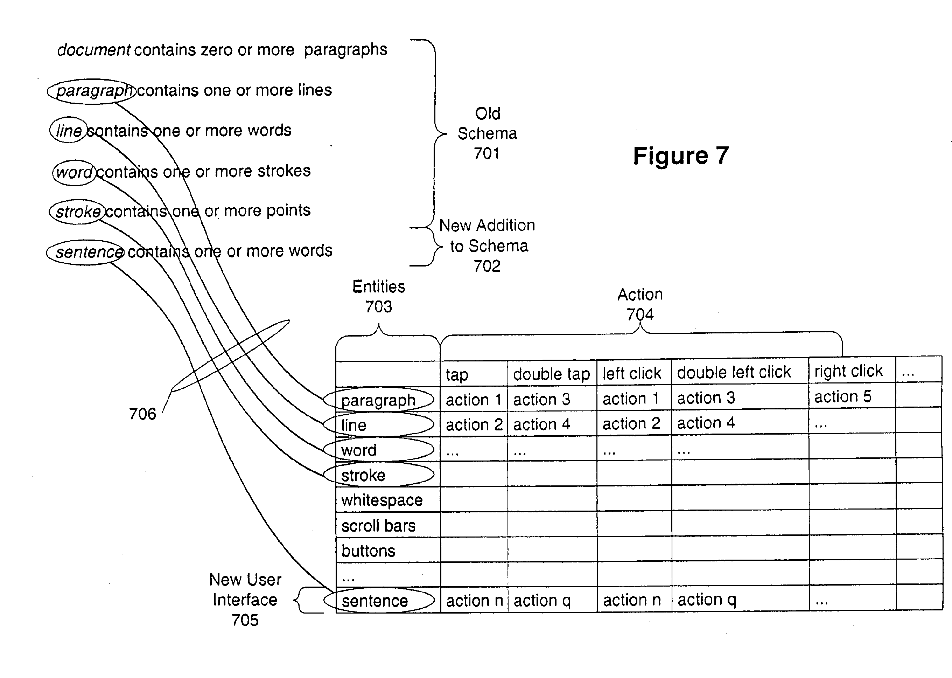

For example, Figure 7 shows an example of how new node types may be added to an existing schema. Old (or existing or deployed) schema 701 including a number of relationships. For example, the old schema defines a document as containing zero or more paragraphs, a paragraph contains one or more lines, a line contains one or more words, a word contains one or more strokes, and a stroke contains one or more points.

As shown in Figure 7, a new node type (here, "sentence") is included as a new addition 702 to the schema. The ability to grow the schema permits the ability for new node types to be added without compromising the usability of previous code. For example, an application using a schema-based approach to a nodal structure of ink may properly process old node types while ignoring new node types (for which it does not understand). This provides the benefit that one may provide an interoperable data structure without excessive costs.

To help with the extensibility of the nodes (other approaches being possible), the various node types may be stored using various identifications for the node types. For example, the node type identifiers may be stored as GUIDs attached to each node. GUIDs are global unique identifiers that may be used to identify specific items uniquely. It is appreciated that other identifiers may be used as is known in the art. GUIDs may have predefined values including "null" and "unsure" values.

Various operations on the ink tree structure may enforce rules on what node types can live within what other node types. For example, one may decide that a word cannot contain a paragraph. All of these rules are defined in a schemas specified in the related language (for example, XML, HTML, and other languages). This provides maximum extensibility, as a third party could define completely different language schema (for example, XML or HTML schemas), for example to specify that a line of musical notation contains a clef and measures, etc.

### Illustrative Paragraph

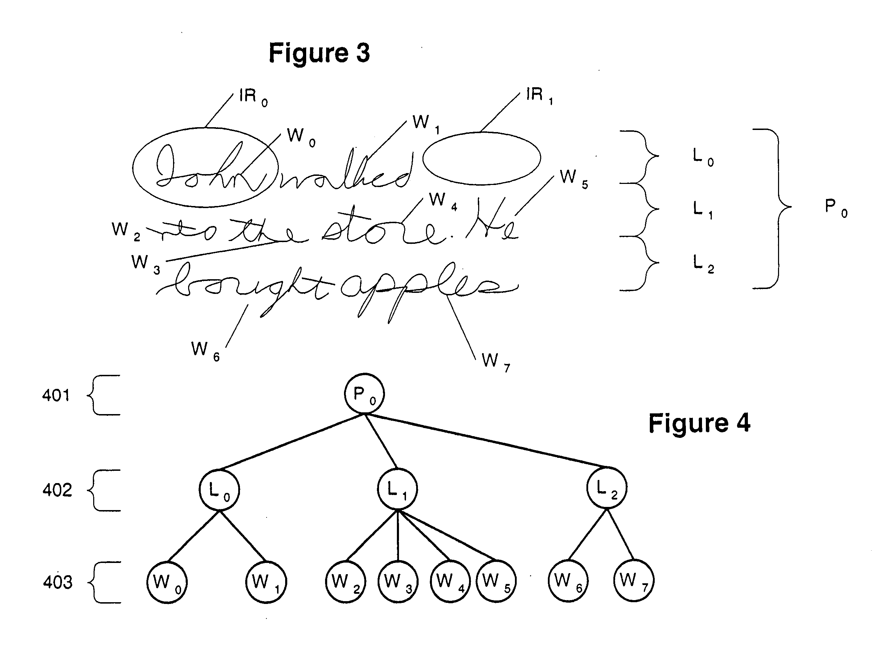

Figure 3 shows a paragraph to be parsed so as to provide ink structure information to the system. The paragraph includes two sentences. For illustrative purposes, the following two sentences are used.
"John walked to the store."
and
"He bought apples."

As shown in Figure 3, the pair of sentences are parsed to three lines L₀, L₁, and L₂. These lines are grouped into paragraph P₀. The words are separated as follows:

| | |
|---|---|
| Ink | Word Node Identifier |
| "John" | W₀ |
| "walked" | W₁ |
| "to" | W₂ |
| "the" | W₃ |
| "store." | W₄ |
| "He" | W₅ |
| "bought" | W₆ |
| "apples." | W₇. |

Figure 3 also shows two interaction regions IR₀ and IR₁. Of course other interaction regions may be specified or determined based, for example, on hit-testing, but these two interaction regions are used for illustrative purposes.

Figure 4 shows an example of an ink tree that includes the results of a parsing operation. Here, paragraph 401 P₀ has three children, namely, sub nodes 402 (L₀, L₁, and L₂) (representing the three lines of the paragraph). Node L₀ is the parent of two word nodes Wo and W₁ (representing the two words in line L₀). Node L₁ is the parent of four word nodes W₂-W₅ (representing the four words in line L₁). Node L₂ is the parent of two word nodes W₆ and W₇ (representing the two words in line L₂) with the word nodes represented collectively as 403.

As is known in the art, one may store all interaction relationships in an application (hard coded or in a tabular form, for example). However, these interaction models are only as current as the present version of the application. For example, if a new interaction model was created that addressed the interaction of an erasing action (for instance, triggered by an erasing sensor in a secondary end of a pen) on a blank area (e.g., IR₁), a previously hared coded interaction model would not be able to comprehend this new interaction. One would need to at least download a new set of drivers or updated version of the original program to address this issue.

In accordance with aspects of the present invention, one may express an interaction model as an interaction schema, where new interactions may be defined according to the schema. One may employ a component that encapsulates user interface logic, with a goal of enabling reuse of the interface logic (and thereby provide a consistent inking experience across applications). In this case, pen-based UI includes selection behaviors and not static UI like hardware buttons and dialog boxes.

The user interface schema may be defined independently of the ink tree nodal structure schema. This provides the benefit of the user interface schema being allowed to incorporate new functionality that does not have an equivalent in a nodal environment. However, the combination of the ink tree nodal schema and the user interface schema improve the extensibility of new ink types. For example, when someone defines a schema with new node types and their relationships, they can also implement a parsing component that will interpret the ink and establish those relationships at runtime, as well as an user interface component that provides common pen-based UI on ink elements defined by the schema.

For example, someone could define a schema for musical notation (a line has a clef and some measures, a measure contains notes and rests, but a note cannot contain a measure, etc.). A musical notation parser may use the ink tree and the user interface schema to communicate its results. In addition, an user interface component for musical notation may implement features like drag-and-drop for notes that snap to position on the scale in real time and only allow the correct number of notes in a measure in real time, etc. Any ink-aware application could then incorporate these capabilities.

With pluggable user interface components, the ink tree structure's base extensibility takes on a new degree of power.

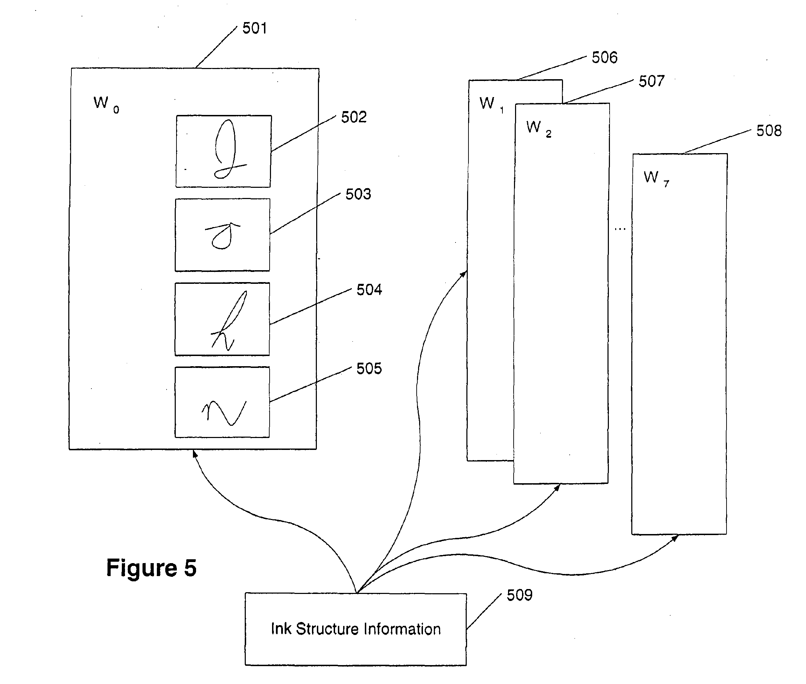

Figure 5 shows an example of how stroke information may be stored. Ink object 501 may include a single stroke (here, a single stroke that spells out the word "John"). Alternatively, the word "John" may include more than one stroke. Figure 5 shows an illustration where the ink object 501 includes four sets of strokes 502-505 that make up the word "John." Other strokes may be stored in the other ink objects 506-508. Finally, ink structure information 509 may be stored. The ink structure information provides the ability for the system to understand how the ink objects 501, 506-508 relate to each other. The ink structure may include paragraph, line, page, block, and other information describing the interrelationships in the ink.

Referring again to Figure 3, one may want to modify an attribute of a word (for example, "walked" word W₁). Using the click-to-select selection technique, one may select word W₁ by double-clicking it. Alternatively, depending on the implementation, one could use a single tap of a stylus to select a word or collection of strokes. Further implementations may even use additional taps to vary the selection scope.

Once selected, one may then perform an operation on the selected word. One would also expect that, to modify a group of words, one would select the words and attempt to perform the function on the selected group. The difficulty with this approach is the function that is to modify the word W₁ also needs to be smart enough to handle the modification of a group of words (or line or paragraph). Simply put, this approach requires the function to be able to handle multiple different types of inputs. The input to the function may be one stroke, multiple strokes, one word, multiple words, one line, multiple lines, one paragraph, or multiple paragraphs or other combinations of groups as well. This variety of different inputs to a function make writing the function difficult because the programmer needs to 1) anticipate all inputs that may be received and 2) write the function such that it performs consistently despite the number of disparate inputs.

By providing a schema representation of the interaction model, new interactions may be defined and have the application interpret new interactions based on information in the schema. For example, if one authors a document using two different styluses and the two styluses have different meanings, yet the handling of the interaction model is added into the interaction schema, an application may properly interpret the interaction model and handle appropriately or ignore the new interaction model, as opposed to returning an error as the new interaction model was unknown.

Referring to Figure 7, a user interface schema may be represented as a table. Here, entities 703 are related to action 704. For example, the various entities (paragraph, line, word, stroke, whitespace, scroll bars, buttons, and the like) are assigned various actions (action 1, action 2, action 3, action 4, action 5, and the like) when an action (tap, double tap, left click, double left click, right click, etc.) is performed on them. This schematic approach to an interface permits one to add a new entity 703 (here as sentence node type 705) and specify which actions may be applied to the new user interface when interacted with in various ways. For example, when one taps on a sentence, action n may be performed. When one double taps on sentence, action q may be performed. In this manner, different user interactions may be associated with new user interface items without difficulty.

Further, in yet another aspect of the invention, the schemas 701 and 702 may be linked to the entities 703. When one adds a new aspect to the schema 701, then the associated entity may be exposed as an entity as one of the entities 703. Using this relationship between the new node types introduced in the schema and the entities in the user interface, a number of benefits may be realized. For example, the underlying code is easier to maintain. One does not need invent separate notations of entities in the same code. Otherwise, the same entity may be referred to by two different concepts. Also, the same entity is modeled in same part of code, where modification of the entity is easily handled without having to review all of one's code.

### Data Structures

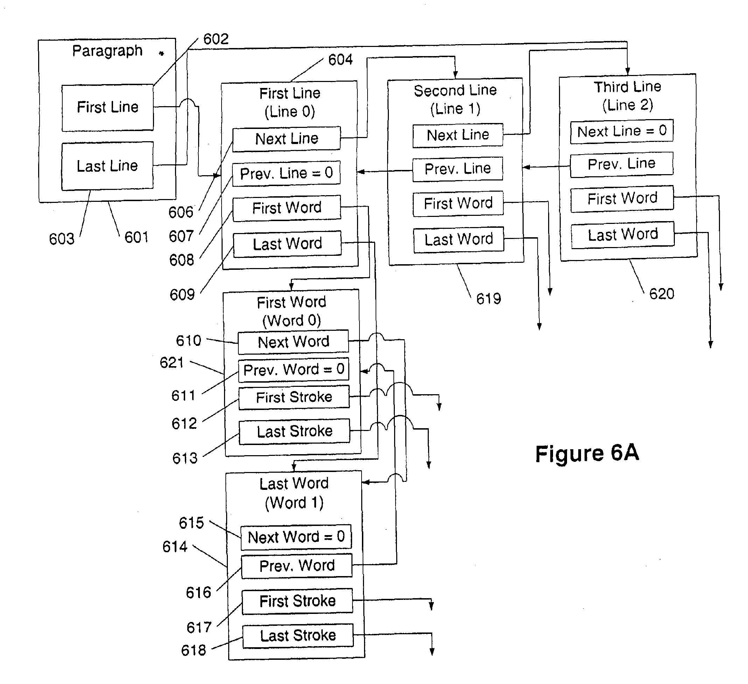

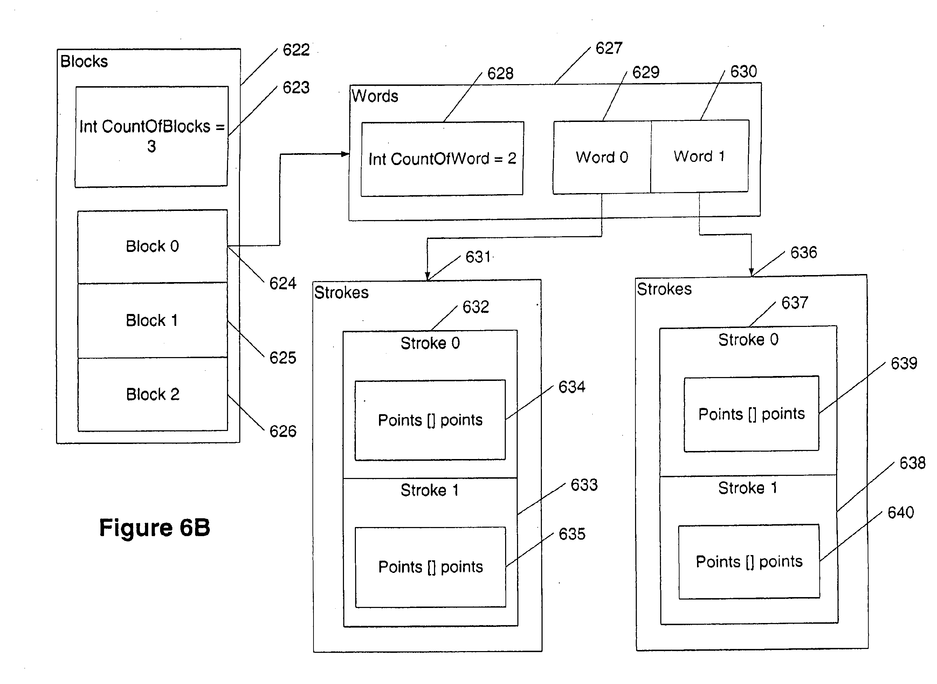

Figures 6A and 6B show illustrative data structures that may be used to support ink trees or other nodal data structures. Figure 6A shows doubly linked tree structure. Figure 6B shows a similar tree using dynamic arrays.

The ink tree of Figure 4 is represented in part by Figure 6A. Paragraph node 601 includes two pointers. The first pointer points to the first line node 604. The second pointer 603 of paragraph node 601 points to the last line node 620. While not shown in Figure 6A, paragraph node 601 may also included a next paragraph pointer and a previous paragraph pointer. Of course, not all pointers need to be used or exist to accurately represent an ink tree.

The first line node 604 includes four pointers. The first pointer 606 points to the next line 619. The second pointer of first line node 604 points to the previous line node. In this example, as there is no previous node to first line node 604, the previous line node pointer 607 does not point to any previous node. Next, first word pointer 608 points to first word node 621. In this example, as there is only one other word under line node 604, the last word pointer 609 points to last word node 614, which is also the next word after W₀.

Second line node 619, similar to first line node 604, includes four pointers as well. The next line pointer of second line node 619 points to third line node 620. The previous line pointer of second 619 points back to first line node 604. First word pointer and last word pointer point to the respective first word and last word under second line node 619. The words associated with his line node 619 and 620 are not shown for the purpose of simplicity.

Third line node 620 includes four pointers as well. Next line node pointer of third line node 620 does not point to subsequent line node (as third line node is the last line in the example of Figure 4). The previous line pointer of third line node 620 points back to second line node 619. The first word pointer and the last word pointer of third line node 620 to point to the words associated with third line node 620.

First word node 621 includes four pointers. The first pointer is next word pointer 610, which points to the next word under line node 604. As there is no previous word under line node 604, previous word pointer 611 does not point to any word. The first stroke pointer 612 and last stroke pointer 613 point respectively to the first and last strokes.

Last word node 614 includes a similar structure to that of first word node 621. Last word node 614 includes a next word pointer 615 (that does not point to any more words), a previous word pointer 616 (that points back to the previous word node 621), a first stroke pointer 617 and a last stroke pointer 618.

The structure of the word nodes 610 and 614 may be embodied as depicted in Figure 6A or may have alternative representations. For example, the word nodes may be ink objects that contain ink strokes. Also, the word may be ink objects that point to strokes.

As an additional point, it is noted that Figure 6A represents nodes of Figure 4. Figure 6A shows the nodes with bidirectional references. In this example, all nodes include pointers to subsequent nodes as well as previous nodes. An advantage in having the number of pointers (or more linked list) is that, from any node, one can find the parent and surrounding nodes. Alternatively, this arrangement may be simplified by eliminating some of the pointers. For example, previous line pointers of line nodes 604, 619, and 620 may be eliminated. Similarly, previous word pointers 611 and 616 may be eliminated as well. Eliminating the previous line pointers and the previous word pointers provides the benefit of a smaller data structure.

It is appreciated that the variety of lines, words, and paragraphs may have multiple sub nodes. It is further appreciated that some nodes may not have subsequent nodes. For example, if a paragraph has three lines and the middle line has no content (e.g., if space has been inserted between two lines), any of the described nodes may be used as a placeholder with no sub nodes and/or content.

Further, it is appreciated that other names may be used to represent the various nodes and their relationships to one another, without departing from the scope of the invention. For example, paragraph node 601 may be referred to as a page node, and a number of nodes inserted between node 601 and the line nodes 604, 619, and 620 or word nodes 621 and 614. The additional inserted nodes may reflect other types of parsings of handwritten ink. These additional nodes may include sentence information (e.g., what words constitute a sentence, and the like).

As an alternative to Figure 6A, the tree structure of Figure 6B may be used. Figure 6B shows a tree structure using dynamic arrays. Dynamic arrays have the advantages of direct access to the members without having to traverse the list. Using dynamic arrays minimizes wasted memory consumed by traversing traditional, static arrays.

One dynamic array implementation may be based on the Microsoft Foundation Class' (MFC's) CArray class. Other implementations of dynamic arrays are known in the art.

Figure 6B shows blocks node 622 including an initial count of the number of blocks 623 contained within it (here, three). First block 0 624 is linked to a words node 627. Other blocks 1 625 and 2 626 may be linked to additional words nodes but are not shown for simplicity.

Words node 627 includes an initial count (628) of the number of words referenced by it (here, two words). Word 0 629 references strokes node 631. Word 1 references strokes node 636. Strokes node 631 includes one or more strokes (for example, stroke 0 632 and stroke 1 633). Each stroke includes one or more points that make up the ink strokes. The points are stored as collections 634 and 635 in the strokes 0 632 and 1 633, respectively.

Similarly, strokes node 636 includes one or more strokes (shown here with strokes 0 637 and stroke 1 638). Each stroke contains one or more points that make up the ink stroke or strokes (here, points 639 and points 640 are related to stroke 0 637 and stroke 1 638 respectively).

Although the invention has been defined using the appended claims, these claims are illustrative in that the invention is intended to include the elements and steps described herein in any combination or sub combination. Accordingly, there are any number of alternative combinations for defining the invention, which incorporate one or more elements from the specification, including the description, claims, and drawings, in various combinations or sub combinations. It will be apparent to those skilled in the relevant technology, in light of the present specification, that alternate combinations of aspects of the invention, either alone or in combination with one or more elements or steps defined herein, may be utilized as modifications or alterations of the invention or as part of the invention. It may be intended that the written description of the invention contained herein covers all such modifications and alterations.

## Claims

1. A process for adding new node types for ink comprising the steps of:
obtaining a first schema with a first set of ink node types;
adding a new ink node type to said first schema;
saving said first schema with said new ink node type as a second schema.

2. The process according to claim 1, wherein said second schema includes a paragraph node.

3. The process according to claim 1, wherein said second schema includes a sentence node.

4. The process according to claim 1, wherein said second schema includes a line node.

5. The process according to claim 1, wherein said second schema includes a word node.

6. The process according to claim 1, wherein said second schema includes a page node.

7. The process according to claim 1, wherein said second schema includes a block node.

8. A process for modifying a user interface for ink comprising the steps of:
listing entities and associated responses to one or more actions by a user;
adding a new entity and associated response or responses;
storing said list of entities and said new entity and associated responses as a new list of entities and associated responses.

9. The process according to claim 8, wherein said new list of entities includes a paragraph entity.

10. The process according to claim 8, wherein said new list of entities includes a page entity.

11. The process according to claim 8, wherein said new list of entities includes a block entity.

12. The process according to claim 8, wherein said new list of entities includes a sentence entity.

13. The process according to claim 8, wherein said new list of entities includes a line entity.

14. The process according to claim 8, wherein said new list of entities includes a word entity.

15. A computer system including an ink schema, said ink schema comprising:
a first schema that includes node types that define relationships between said node types;
a second schema that defines responses for user actions with user interface entities;
wherein said node types are represented in said user interface entities.
